# EUROPÄISCHE PATENTSCHRIFT

(11) **EP 1 291 305 B1**
(45) Veröffentlichungstag und Bekanntmachung des Hinweises auf die Patenterteilung: **10.10.2007**
(21) Anmeldenummer: 02012125.7
(22) Anmeldetag: 31.05.2002
(51) Int. Cl.: B65G 47/71, B65G 47/64

(54) **Verteilervorrichtung**
Distribution device
Dispositif de distribution

(30) Priorität: 05.09.2001 DE 10143506
(43) Veröffentlichungstag der Anmeldung: 12.03.2003
(73) Patentinhaber: Weber Maschinenbau GmbH & Co. KG, 35236 Breidenbach (DE)
(72) Erfinder: Weber, Günther, 17033 Neubrandenburg (DE)
(74) Vertreter: Manitz, Finsterwald & Partner GbR

(56) Entgegenhaltungen:
- DE-C- 619 395
- US-A- 5 209 339
- US-A- 5 634 549

## Beschreibung

Die vorliegende Erfindung betrifft eine Verteilervorrichtung für Produkte, insbesondere für in Scheiben geschnittene Lebensmittelprodukte, gemäß dem Oberbegriff des Anspruchs 1 sowie ein Verteilverfahren gemäß dem Oberbegriff des Anspruchs 11.

Beim Schneiden und Portionieren von Lebensmittelprodukten werden heutzutage Hochleistungs-Slicer eingesetzt, mit denen die Lebensmittelprodukte in dünne Scheiben geschnitten werden. Die Scheiben werden anschließend zu Stapeln oder zu geschindelten Portionen geschichtet, gewogen und in einer Verpackungsmaschine verpackt. Hierbei ist es wünschenswert, die Produkte eines ankommenden Produktstromes so zu verteilen, dass der abgehende Produktstrom eine andere Gruppierung aufweist. Beispielsweise kann der angehende Produktstrom in Förderrichtung hintereinander angeordnete einzelne Produkte umfassen, wohingegen der abgehende Produktstrom Gruppen aufweist, in denen zwei, drei, vier oder mehr Produkte nebeneinander angeordnet sind.

DE 619395 beschreibt eine Querverteilungsvorrichtung, bei der auf dem Ende einer zu verteilende Teigstücke zuführenden Ablegezunge liegende Teigstücke einen Bestandteil einer fertig zusammengestellten, abzuführenden Produktgruppe bilden, wobei die Ablegezunge mit einem zum Abtransport dienenden Förderer überlappt.

Aus US 5,209,339 ist ein Fördersystem zum Vervielfachen eines oder mehrerer Produkteingangsströme mit einem einteiligen Transferförderer bekannt.

Es ist die Aufgabe der vorliegenden Erfindung, eine Verteilervorrichtung sowie ein Verteilverfahren für Produkte zu schaffen, die bzw. das in bezug auf die Verteilungsvarianten eine hohe Flexibilität aufweist.

Die Lösung dieser Aufgabe erfolgt durch die Merkmale des Anspruchs 1.

Durch die erfindungsgemäße Verteilervorrichtung läßt sich ein ankommender Produktstrom außerordentlich flexibel in einen abgehenden Produktstrom unterschiedlicher Gruppierung aufteilen. Insbesondere ist es durch Verwendung mindestens eines unterteilten Verteilerbandes mit unabhängigen Antrieben möglich, einen ankommenden Produktstrom so zu verteilen, dass die Mitglieder einer Gruppierung von einer geradzahligen Anzahl auf eine ungeradzahlige Anzahl (oder umgekehrt) verteilt werden.

Im Rahmen dieser Erfindung können beliebige Produkte Anwendung finden. Besonders geeignet ist die Erfindung jedoch für die Verteilung von geschnittenen Lebensmittelprodukten, die entweder einzeln oder als geschindelte oder gestapelte Portionen angefördert werden können.

Die Lösung der genannten Aufgabe erfolgt außerdem durch die Merkmale des Anspruchs 11.

Vorteilhafte Ausführungsformen der Erfindung sind in der Beschreibung, den Ansprüchen und der Zeichnung beschrieben.

Nach einer ersten vorteilhaften Ausführungsform weist mindestens ein Verteilerband im wesentlichen die gleiche Breite wie das Abführband auf und ist insbesondere breiter als das Zuführband. Hierdurch ist es möglich, durch die Verteilervorrichtung eine Verbreiterung des ankommenden Produktstromes zu erreichen.

Nach einer weiteren vorteilhaften Ausführungsform ist das Zuführband oberhalb mindestens eines Verteilerbandes angeordnet und insbesondere zumindest bereichsweise nach unten geneigt. Hierdurch läßt sich der ankommende Produktstrom schonend von dem Zuführband auf das Verteilerband übergeben.

Bevorzugt überlappt das Zuführband teilweise mit mindestens einem Verteilerband, wodurch erreicht ist, dass Produkte von dem Verteilerband hinter das vordere Ende des Zuführbandes gefördert werden können, so dass ein nachfolgendes, von dem Zuführband angefördertes Produkt neben dem auf dem Verteilerband bereits abgelegten Produkt abgelegt werden kann.

Nach einer weiteren vorteilhaften Ausführungsform der Erfindung sind das Zuführband und mindestens ein Verteilerband übereinander derart vertikal beabstandet, dass auf dem Verteilerband befindliche Produkte unter dem Zuführband hindurch gefördert werden können. Bei dieser Ausführungsform ist es möglich, bei einer Rückwärtsbewegung des Verteilerbandes Produkte, die sich bereits auf dem Verteilerband befinden, unterhalb des Zuführbandes hindurchzuführen, wodurch höhere Verteilergeschwindigkeiten erzielt werden, ohne dass die auf dem Verteilerband befindlichen Produkte beeinträchtigt werden.

In einer weiteren Ausführungsform der Erfindung sind zwei Verteilerbänder in Förderrichtung zwischen Zuführband und Abführband hintereinander angeordnet. Die Verteilerbänder sind dabei unabhängig voneinander quer zur Förderrichtung verschiebbar und die Teile der Verteilerbänder sind unabhängig voneinander in und entgegen der Förderrichtung angetrieben. Auf diese Weise können praktisch alle Umverteilungen realisiert werden, insbesondere die Verteilung der Gruppierungen eines Produktstroms von einer ungeradzahligen Anzahl auf eine geradzahlige Anzahl.

Bei dieser Ausführungsform können die Verteilerbänder zudem in gleicher oder entgegen gesetzter Richtung quer zur Förderrichtung gleichzeitig verschiebbar sein. Dies ermöglicht eine außerordentlich schnelle und vielseitige Verteilung des Produktstroms, weil auf beiden Verteilerbändern gleichzeitig Umgruppierungen durchgeführt werden können.

Nachfolgend wird die vorliegende Erfindung rein beispielhaft anhand vorteilhafter Ausführungsformen und unter Bezugnahme auf die beigefügten Zeichnungen beschrieben. Es zeigen:
- Fig. 1: eine Draufsicht auf eine erste Ausführungsform einer Vertei-lervorrichtung, wobei sich das Verteilerband in seiner linken Endstellung befindet;
- Fig. 2: eine Draufsicht auf die Verteilervorrichtung von Fig. 1, wobei sich das Verteilerband in seiner rechten Endstellung befindet;
- Fig. 3: eine Seitenansicht der Verteilervorrichtung von Fig. 1 und 2;
- Fig. 4a - 4i: einen Schemaablauf einer 1/4-Verteilung mit der ersten Ausführungsform;
- Fig. 5a - 5h: einen Schemaablauf einer 2/3-Verteilung mit der ersten Ausführungsform;
- Fig. 6: einen Schemaablauf einer 2/4-Verteilung mit der ersten Ausführungsform; und
- Fig. 7: einen Schemaablauf einer 3/4-Verteilung mit einer zweiten Ausführungsform.

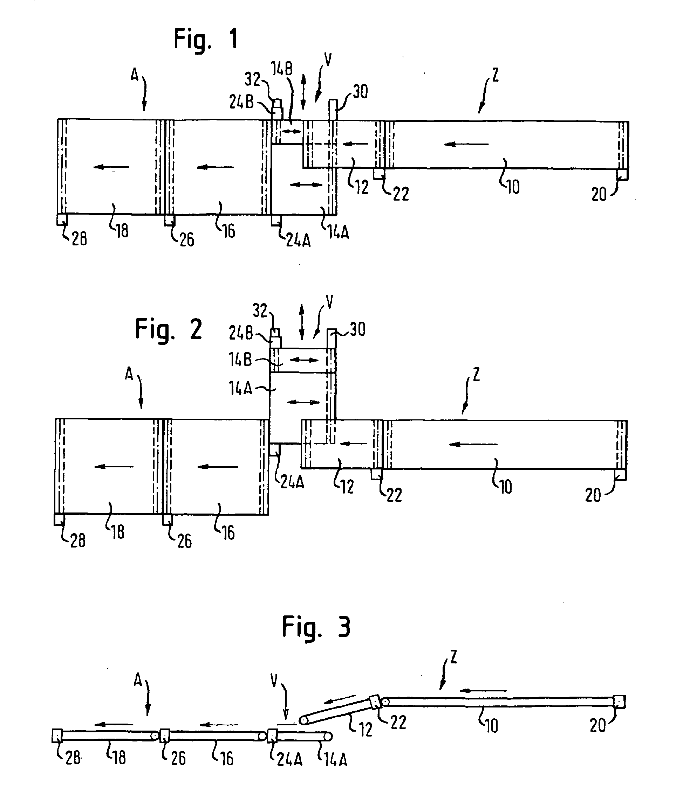

Die Fig. 1 bis 3 zeigen eine erste Ausführungsform einer Verteilervorrichtung gemäß der Erfindung mit einem Zuführband Z, einem Abführband A und einem Verteilerband V, wobei Zuführband, Verteilerband und Abführband in Förderrichtung hintereinander angeordnet sind. Wie zu erkennen ist, weist das Zuführband Z zwei in Förderrichtung hintereinander angeordnete Förderbänder 10 und 12 und das Abführband A zwei hintereinander angeordnete Förderbänder 16, 18 auf. Die Förderbänder 10 und 12 des Zuführbandes Z schließen unmittelbar aneinander an, wobei das Förderband 12 mit seinem in Förderrichtung vorderen Ende gegenüber seinem hinteren Ende, das bündig mit dem vorderen Ende des Förderbandes 10 ist, nach unten geneigt ist. Das Förderband 10 ist um ein Vielfaches länger als das Förderband 12. Beide Förderbänder 10 und 12 sind in die mit Pfeilen gekennzeichnete Förderrichtung angetrieben. Die beiden Förderbänder 16 und 18 des Abführbandes A sind in einer Ebene unmittelbar aneinander angrenzend hintereinander angeordnet und in der dargestellten Förderrichtung angetrieben. Hierbei bezeichnen die Bezugszeichen 20 und 22 die Antriebe der Förderbänder 10 und 12 und die Bezugszeichen 26, 28 bezeichnen die Antriebe der Förderbänder 16 und 18.

Wie die Fig. 1 bis 3 zeigen, ist das Verteilerband V in Förderrichtung zweigeteilt und weist zwei parallele und koaxial angeordnete Förderbänder 14A und 14B auf, die jeweils voneinander unabhängige Antriebe 24A und 24B besitzen. Mit Hilfe der beiden Antriebe können die Förderbänder 14A und 14B unabhängig voneinander in und entgegen der Förderrichtung bewegt werden.

Das Verteilerband V, d.h. die beiden nebeneinander angeordneten Förderbänder 14A und 14B sind zusätzlich mit Hilfe einer Verschiebeeinrichtung quer zur Förderrichtung verschiebbar, wie dies in den Fig. 1 und 2 mit einem Doppelpfeil angedeutet ist. Hierbei ist die Verschiebeeinrichtung durch zwei Linearantriebe 30, 32 gebildet.

Wie insbesondere die Fig. 1 und 2 zeigen, weist das Verteilerband V im wesentlichen die gleiche Breite wie das Abführband A auf. Beide Bänder sind etwa doppelt so breit wie das Zuführband Z. Die Breite des Förderbandes 14B beträgt etwa ein Viertel der Breite des Förderbandes 16 und etwa ein Drittel der Breite des Förderbandes 14A. Ferner zeigen die Figuren, dass das Förderband 12 des Zuführbandes Z mit dem Verteilerband V überlappt, wobei sich das in Transportrichtung vordere Ende des Förderbandes 12 etwa in der Mitte des Verteilerbandes V befindet. Ferner ist das in Transportrichtung vordere Ende des Förderbandes 12 gegenüber der Oberfläche des Verteilerbandes V vertikal beabstandet, so dass unter dem Förderband 12 hindurch Produkte transportiert werden können.

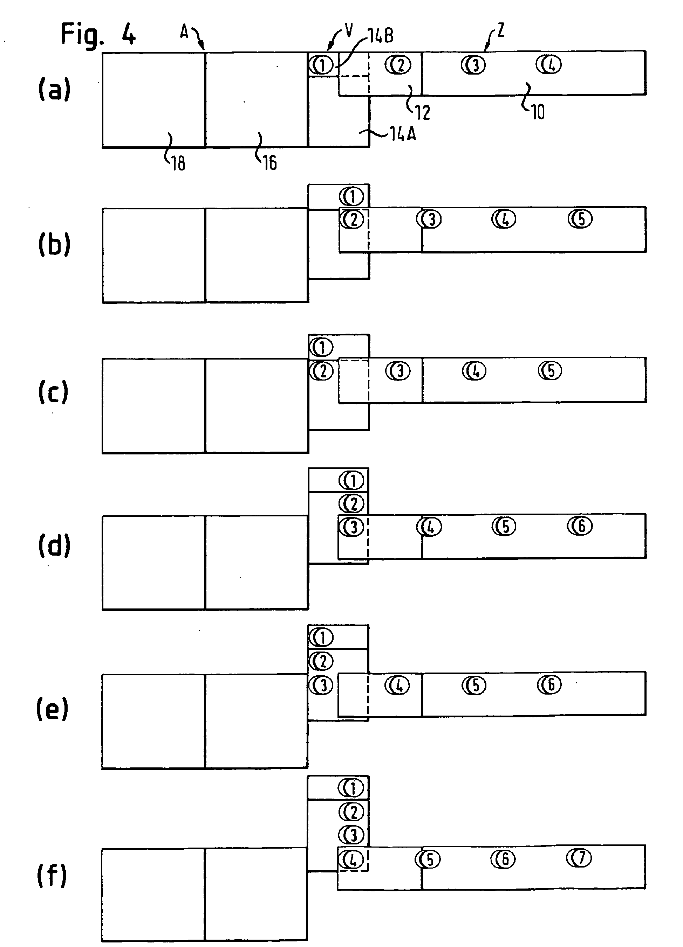

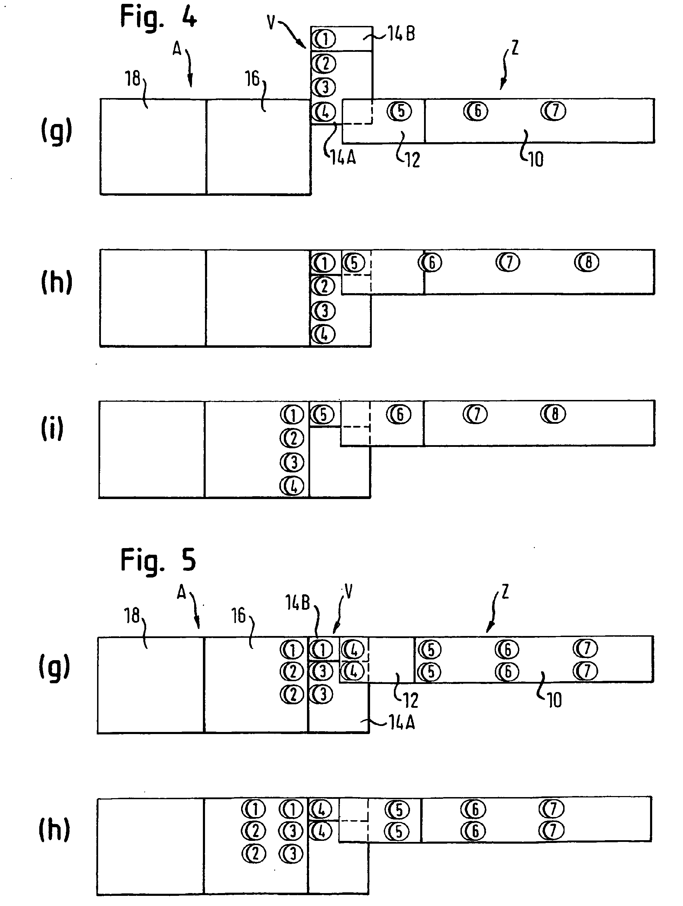

Die Fig. 4 bis 6 zeigen verschiedene Abläufe der in den Fig. 1 bis 3 dargestellten ersten Ausführungsform, wobei in den Fig. 4 bis 6 Einzelheiten der Verteilervorrichtung nicht dargestellt sind.

In den Fig. 4a bis 4i ist eine sogenannte 1/4-Verteilung dargestellt, bei der die zugeführten Produkte, die mit fortlaufenden Nummern 1 bis 8 gekennzeichnet sind, in Gruppen mit einem Mitglied zugefördert werden und die abgeführten Produkte in Gruppen mit vier Mitgliedern abgeführt werden, die quer zur Förderrichtung nebeneinander liegen. Unter einem Produkt wird hierbei ein Einzelprodukt, eine geschindelte oder eine gestapelte Produktportion verstanden.

Fig. 4a zeigt einen Zustand, bei dem das erste angeförderte Produkt von dem Förderband 12 des Zuführförderers Z bereits auf das Förderband 14B des Verteilerbandes V überführt worden ist. Bevor das Produkt mit der Nummer 2 auf das Verteilerband V überführt wird, wird dieses um eine Produktbreite querverschoben. Gleichzeitig wird das Förderband 14B entgegen der Förderrichtung verschoben, so dass bei Übergabe des Produktes mit der Nummer 2 beide Förderbänder 14A und 14B synchron in Förderrichtung bewegt werden können, so dass beide Produkte 1 und 2 nebeneinander ausgerichtet zu liegen kommen.

Anschließend wird mit dem Verteilerband V eine weitere Querbewegung und eine weitere Rückzugsbewegung durchgeführt, so dass in der oben beschriebenen Weise das Produkt mit der Nummer 3 auf das Verteilerband V übertragen werden kann (vgl. Fig. 4d und e).

Wie Fig. 4f zeigt, wird anschließend eine weitere Querbewegung und eine nochmalige Rückzugsbewegung des Verteilerbandes V durchgeführt, so dass anschließend das Produkt mit der Nummer 4 von dem Zuführband auf das Verteilerband übertragen werden kann.

Das Verteilerband V wird anschließend in seine linke Endposition zurückgefahren (vgl. Fig. 4h), so dass anschließend alle vier nebeneinander angeordneten Produkte mit der Nummer 1 bis 4 auf das Abführband A übertragen werden können. Gleichzeitig wird das erste nachfolgende Produkt Nr. 5 der nächsten Gruppe von dem Zuführband auf das Verteilerband übertragen, so dass der nächste Verteilzyklus beginnen kann.

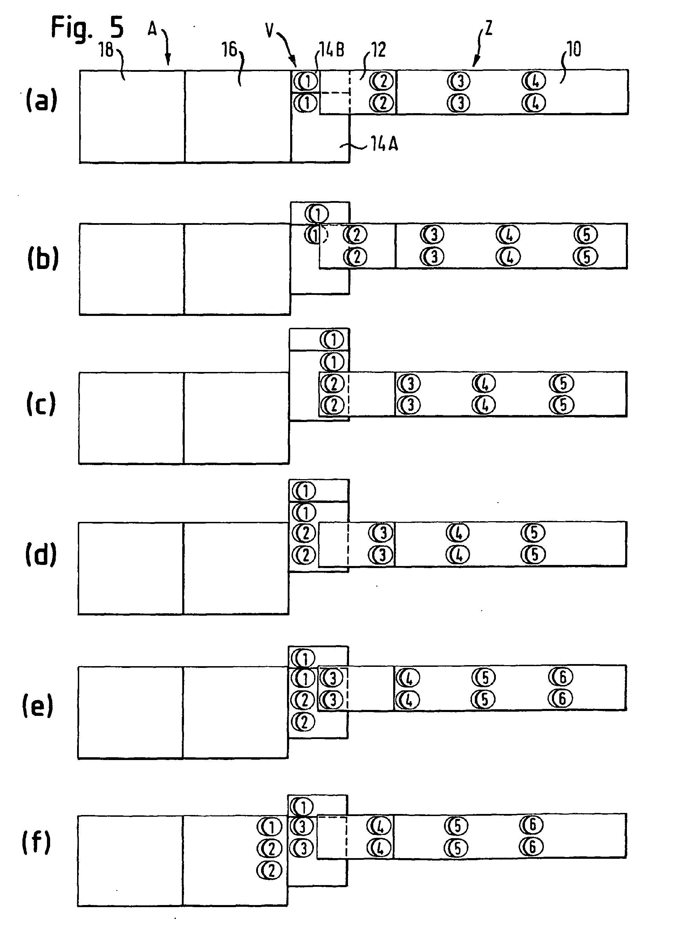

Fig. 5 zeigt eine zu Fig. 4 ähnliche Darstellung einer Verteilung, wobei in Fig. 5 eine 2/3-Verteilung dargestellt ist, d.h. der ankommende Produktstrom weist Produktgruppen auf, die jeweils aus zwei quer zur Förderrichtung nebeneinander angeordneten Produkten bestehen, wobei eine solche Verteilung erfolgt, dass der abgeführte Produktstrom jeweils Gruppen aufweist, die aus drei quer zur Förderrichtung nebeneinander angeordneten Produkten bestehen.

Wie in Fig. 5a dargestellt ist, wird zunächst das Produktpaar mit der Nummer 1 von dem Zuführband auf das Verteilerband übertragen. Anschließend wird das Verteilerband V quer zur Förderrichtung um eine doppelte Produktbreite verschoben und gleichzeitig werden die beiden Förderbänder 14A und 14B entgegen der Förderrichtung nach hinten bewegt (Fig. 5b und c). Anschließend werden beide Förderbänder 14A und 14B synchron zueinander und auch synchron mit dem Förderband 12 in Förderrichtung bewegt, so dass das Produktpaar mit der Nummer 2 fluchtend zu dem Produktpaar mit der Nummer 1 auf dem Verteilerband abgelegt werden kann (Fig. 5d).

Anschließend wird das Verteilerband V um eine Produktbreite quer zur Förderrichtung zurückbewegt (Fig. 5e), woraufhin das Förderband 14A des Verteilerbandes, nicht jedoch das Förderband 14B, in Förderrichtung und zusammen mit dem Förderband 16 des Abführbandes bewegt werden, so dass die erste Produktgruppe, bestehend aus drei quer zur Förderrichtung nebeneinander angeordneten Produkten auf dem Abführband abgelegt werden kann (vgl. Fig. 5f). Gleichzeitig wird hierbei das nachfolgende Produktpaar mit der Nummer 3 von dem Zuführband auf das Verteilerband übertragen.

Im nachfolgenden Schritt wird das Verteilerband in seine linke Endposition zurückgeführt, so dass die nächste Dreiergruppe von dem Verteilerband V auf das Förderband 16 des Abführbandes A übertragen werden kann. Gleichzeitig wird die nächste nachfolgende Zweiergruppe mit der Nummer 4 von dem Zuführband auf das Verteilerband übertragen, so dass der Verteilzyklus erneut beginnen kann.

Wie aus dem vorstehenden deutlich wird, ist bei dieser Verteilung wesentlich, dass das Verteilerband zwei voneinander unabhängig antreibbare Teilbänder aufweist.

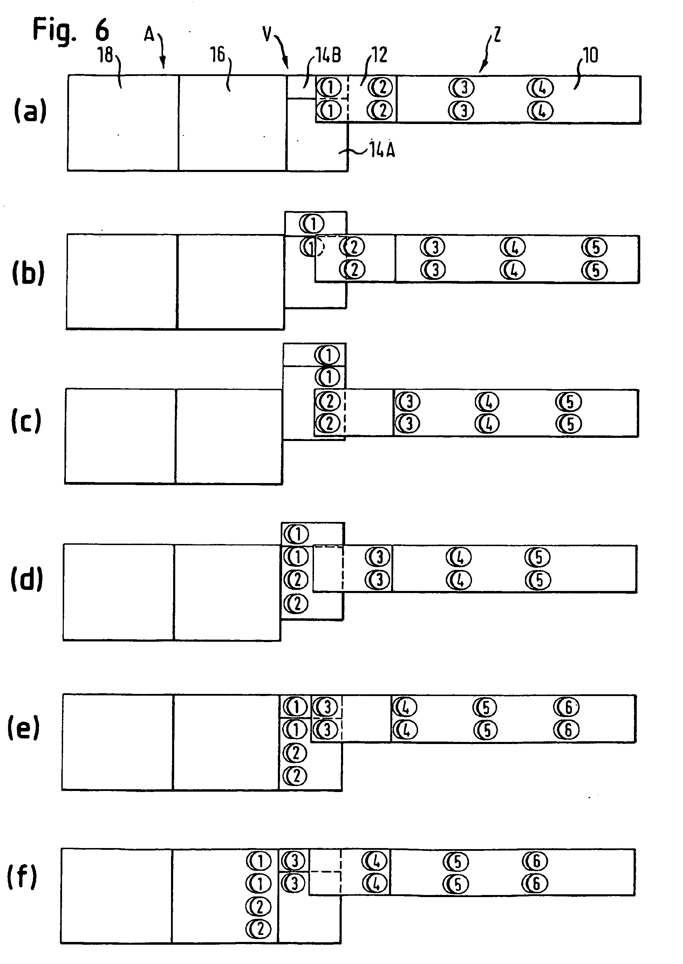

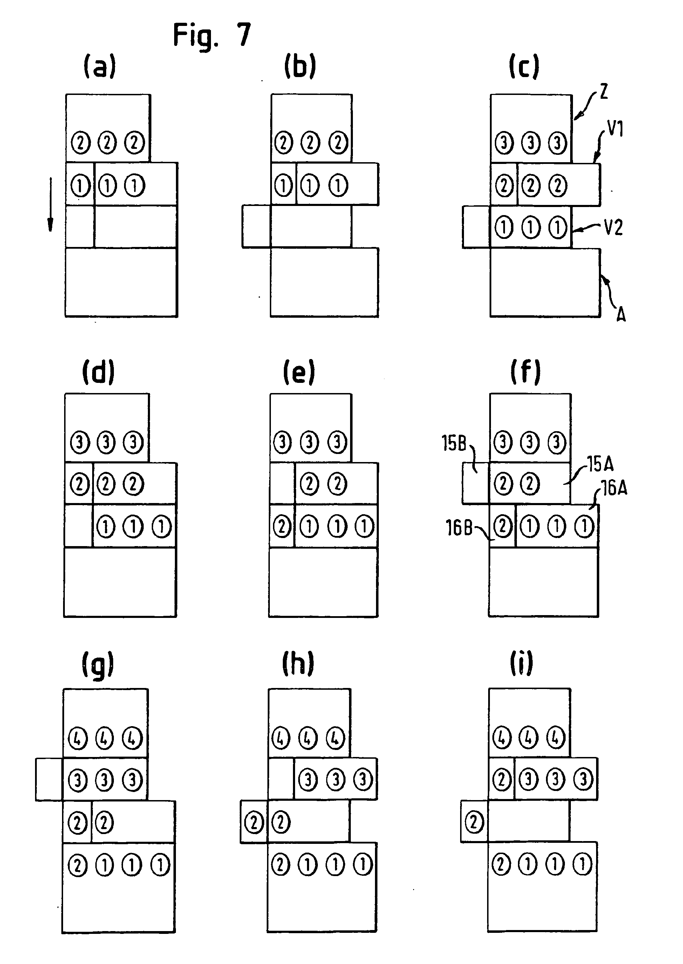

Fig. 6 zeigt eine 2/4-Verteilung, bei der ein ankommender Produktstrom mit Produktpaaren in einen abgehenden Produktstrom mit einer Gruppe von vier Mitgliedern aufgeteilt wird.

Wie Fig. 6a zeigt, befindet sich das Verteilerband zunächst in seiner linken Endposition, d.h. fluchtend mit dem Abführband A und das erste Produktpaar mit der Nummer 1 wird von dem Förderband 12 des Zuführbandes Z auf das Verteilerband V übertragen. Anschließend wird das Verteilerband V um zwei Produktbreiten quer zur Förderrichtung verschoben und entgegen der Förderrichtung nach hinten bewegt, so dass im anschließenden Schritt (Fig. 6c) das Produktpaar mit der Nummer 2 fluchtend zu dem Produktpaar mit der Nummer 1 auf das Verteilerband V übertragen werden kann. Anschließend wird das Verteilerband V in seine linke Endposition zurückbewegt (Fig. 6e) und die vier Produkte der Produktgruppen mit den Nummern 1 und 2, die bereits nebeneinander quer zur Förderrichtung ausgerichtet angeordnet sind, können durch synchrones Bewegen des Verteilerbandes V und des Abführbandes A auf das Förderband 16 des Abführbandes A übertragen werden. Gleichzeitig kann die nächste zugeführte Produktgruppe mit der Nummer 2, die zwei nebeneinander angeordnete Produkte umfaßt, von dem Förderband 12 des Zuführbandes Z auf das Verteilerband V übertragen werden, so dass der Verteilzyklus von neuem beginnen kann.

Wie insbesondere die Fig. 5b und c zeigen, kann die Querbewegung des Verteilerbandes V sowie dessen Rückzugsbewegung miteinander kombiniert werden, so dass Produkte oder Produktpaare schräg zur Förderrichtung gefördert werden. Hierdurch ist ein mehrfaches Bremsen und Beschleunigen des Förderbandes vermieden. Gleichzeitig können die Produkte bzw. Produktpaare unterhalb des Zuführbandes hindurchgeführt werden, wodurch höhere Verteilgeschwindigkeiten erreicht werden.

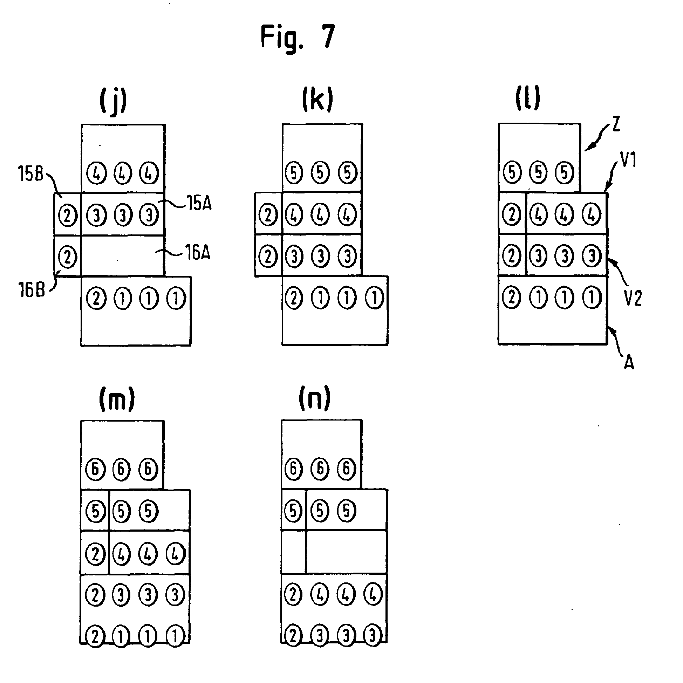

In den Fig. 7a-7n ist der Schemaablauf einer 3/4-Verteilung unter Verwendung einer zweiten Ausführungsform der erfindungsgemäßen Verteilervorrichtung dargestellt. Die Verteilervorrichtung ist darin schematisch abgebildet. Der in Fig. 7a dargestellte Pfeil zeigt die Förderrichtung, d.h. die Transportrichtung an.

In der zweiten Ausführungsform sind zwei Verteilerbänder V1 und V2 in Förderrichtung hintereinander zwischen dem Zuführband Z und dem Abführband A angeordnet. Die Verteilerbänder V1 und V2 grenzen unmittelbar aneinander bündig an. Sie sind in Förderrichtung unabhängig voneinander angetrieben.

Ferner sind die Verteilerbänder V1 und V2 mit nicht in Fig. 7 dargestellten Linearantrieben unabhängig voneinander quer zur Förderrichtung verschiebbar. So können sie auch gleichzeitig in gleicher oder entgegen gesetzter Richtung quer zur Förderrichtung verschoben werden.

Die Verteilerbänder V1 und V2 besitzen beide etwa die gleiche Breite wie das Abführband A. Die Breite des Zuführbandes Z beträgt etwa drei Viertel der Breite des Abführbandes A. Das Verteilerband V1 grenzt in einer Ebene unmittelbar an das Zuführband Z an, während das Verteilerband V2 unmittelbar in der gleichen Ebene an das Abführband A angrenzt.

Die Verteilerbänder V1 und V2 sind wie das Verteilerband V der ersten Ausführungsform zweigeteilt und bestehen jeweils aus zwei parallelen, koaxial angeordneten Förderbändern 15A, 15B bzw. 16A, 16B mit unabhängigen Antrieben. Alle vier Förderbänder können unabhängig voneinander in und entgegen der Förderrichtung bewegt werden.

Die Förderbänder 15A und 16A sind etwa gleich groß und in Förderrichtung hintereinander angeordnet. Zudem sind die etwa gleich großen Förderbänder 15B und 16B in Förderrichtung hintereinander angeordnet. Die Breite der Förderbänder 15A und 16A beträgt etwa drei Viertel und die Breite der Förderbänder 15B und 16B beträgt etwa ein Viertel der Breite des jeweiligen Verteilerbandes V1 und V2.

Die Fig. 7a-7n stellen eine sogenannte 3/4-Verteilung dar. Die Produkte sind mit den Nummern 1 bis 6 gekennzeichnet und werden in Dreiergruppen auf dem Zuführband Z zugefördert.

Fig. 7a zeigt einen Zustand, in dem auf dem Verteilerband V1 bereits eine Gruppe aus drei vom Zuführband Z zugeförderten Produkten mit der Nummerkombination 1-1-1 abgelegt ist. Sodann wird wie in Fig. 7b gezeigt das Verteilerband V2 durch eine Querbewegung um eine Produktbreite in seine in Förderrichtung gesehen rechte Endposition bewegt. Im nächsten Schritt werden die Produkte mit den Nummern 1-1-1 wie in Fig. 7c dargestellt auf das Verteilerband V2 überführt. Gleichzeitig wird eine Dreiergruppe von Produkten mit den Nummern 2-2-2 vom Zuführband Z auf das Verteilerband V1 übertragen. Sodann wird das Verteilerband V2 um eine Produktbreite quer zur Förderrichtung in seine in Fig. 7d gezeigte linke Endposition verschoben.

Anschließend wird, wie in Fig. 7e angedeutet, vom Förderband 15B ein Produkt mit der Nummer 2 in Förderrichtung auf das Förderband 16B übertragen, so dass das Verteilerband V2 komplett mit einer Vierergruppe aus drei Produkten der Nummer 1 und einem Produkt der Nummer 2 belegt ist (Nummernkombination 2-1-1-1 in Fig. 7e).

Dann wird das Verteilerband V1 mit einer Querbewegung in seine rechte Endposition verschoben (Fig. 7f). Daraufhin werden, wie in Fig. 7g gezeigt, alle Bänder, d.h. das Zuführband Z, die Verteilerbänder V1 und V2 und das Abführband A, in Bewegung gesetzt, um die auf den jeweiligen Bändern vorhandenen Produkte in Förderrichtung auf das nächste Band zu übertragen. So gelangt die Vierergruppe mit den Nummern 2-1-1-1 auf das Abführband A und die Umgruppierung einer Dreiergruppe zu einer Vierergruppe ist abgeschlossen.

Im nächsten Schritt, der in Fig. 7h dargestellt ist, werden die Verteilerbänder V1 und V2 jeweils mit einer Querbewegung gegeneinander derart verschoben, dass sich das Verteilerband V1 in seiner linken Endposition und sich das Verteilerband V2 in seiner rechten Endposition befindet. Sodann wird ein Produkt mit der Nummer 2 mit einer Rückzugsbewegung der Förderbänder 16B und 15B entgegen der Förderrichtung vom Förderband 16B auf das Förderband 15B überführt (Fig. 7i). Anschließend wird auch das Verteilerband V1 quer zur Transportrichtung in seine rechte Endposition verschoben, dargestellt in Fig. 7j.

Dann werden das Zuführband Z und das Förderband 15A in Transportrichtung in Bewegung gesetzt, wodurch die auf dem Förderband 15A vorhandene Dreiergruppe mit der Nummernkombination 3-3-3 auf dem Förderband 16A abgelegt wird. Gleichzeitig wird eine Dreiergruppe mit der Nummernkombination 4-4-4 vom Zuführband Z auf das Förderband 15A übertragen. In diesem Zustand (Fig. 7k) befindet sich eine Vierergruppe 2-3-3-3 auf dem Verteilerband V2 und eine Vierergruppe 2-4-4-4 auf dem Verteilerband V1.

Nun werden mit den Verteilerbändern V1 und V2 gleichzeitig Querbewegungen durchgeführt, um sie um eine Produktbreite in ihre linken Endpositionen zu verschieben (Fig. 71). Sodann werden alle Bänder in Förderrichtung in Bewegung gesetzt. Die auf dem Abführband A vorhandene Vierergruppe 2-1-1-1 wird dabei um eine Produktlänge auf dem Abführband weitertransportiert. Zur selben Zeit wird die Vierergruppe 2-3-3-3 auf dem Verteilerband V2 auf das Abführband A überführt. Die auf dem Verteilerband V1 vorhandene Vierergruppe 2-4-4-4 wird gleichzeitig auf dem Verteilerband V2 abgelegt und eine Dreiergruppe mit der Nummernkombination 5-5-5 wird vom Zuführband Z auf das Verteilerband V1 übertragen (Fig. 7m).

Dann werden das Verteilerband V2 und das Abführband A in Förderrichtung weiterbewegt, um die Vierergruppe 2-3-3-3 auf dem Abführband A um eine Produktlänge weiter zu transportieren und die Vierergruppe 2-4-4-4 von dem Verteilerband V2 auf das Abführband A zu übertragen (Fig. 7n). Damit ist ein Zyklus der Umgruppierung von vier Dreiergruppen zu drei Vierergruppen abgeschlossen.

Mit der zweiten Ausführungsform der erfindungsgemäßen Verteilervorrichtung kann eine Produktgruppe einer ungeraden Anzahl auf eine gerade Anzahl verteilt werden. Zudem wird durch den Einsatz zweier Verteilerbänder, auf denen gleichzeitig Umgruppierungen vorgenommen werden, eine schnellere und somit effizientere Verteilung der Produkte ermöglicht.

Zusammenfassend ist festzustellen, dass mit der erfindungsgemäßen Verteilervorrichtung praktisch alle denkbaren Umverteilungen von Produktgruppierungen realisiert werden können. Dies kann wie in der ersten und zweiten Ausführungsform beschrieben durch den Einsatz von einem oder zwei Verteilerbändern geschehen. Alternativ kann durch Anordnen mehrerer Verteilerbänder hintereinander und durch den umverteilenden Einsatz eines oder mehrerer Verteilerbänder in Abhängigkeit von der jeweils benötigten Verteilungsvariante eine hohe Flexibilität der Verteilervorrichtung erreicht werden.

Zudem können die Verteilerbänder nicht nur im Verhältnis 1:3, d.h. unsymmetrisch unterteilt sein, vielmehr sind auch andere unsymmetrische sowie symmetrische Unterteilungen der Verteilerbänder denkbar, um einen vielseitigen Einsatz der Verteilervorrichtung zu realisieren.

## Patentansprüche

1. Verteilervorrichtung für Produkte, umfassend
ein Zuführband (Z) und ein Abführband (A), die in Förderrichtung hintereinander angeordnet sind, und
mindestens ein Verteilerband (V), das in Förderrichtung zwischen Zuführband (Z) und Abführband (A) angeordnet ist, wobei:
das Verteilerband (V) in und entgegen der Förderrichtung antreibbar und quer zur Förderrichtung verschiebbar ist,
das Verteilerband (V) in Förderrichtung zumindest zweigeteilt ist, und
jedes Teil (14A, 14B) des Verteilerbandes (V) einen Antrieb aufweist, wobei die Antriebe (24A, 24B) voneinander unabhängig sind
**dadurch gekennzeichnet,**
**dass** die Teile (14A, 14B) des Verteilerbandes (V) unmittelbar nebeneinander angeordnet und als eine Einheit quer zur Förderrichtung verschiebbar sind.

2. Verteilervorrichtung nach Anspruch 1,
**dadurch gekennzeichnet,**
**dass** das Verteilerband (V) derart zwischen dem Zuführband (Z) und dem Abführband (A) angeordnet ist, dass eine in Förderrichtung zwischen dem Zuführband (Z) und dem Abführband (A) vorhandene Lücke von dem Verteilerband (V) überbrückt ist.

3. Verteilervorrichtung nach Anspruch 1 oder 2,
**dadurch gekennzeichnet, dass**
mindestens ein Verteilerband (V) im wesentlichen die gleiche Breite wie das Abführband (A) aufweist und insbesondere breiter ist als das Zuführband (Z).

4. Verteilervorrichtung nach einem der Ansprüche 1 bis 3,
**dadurch gekennzeichnet , dass**
die Breitenmaße der beiden Teile (14A, 14B) mindestens eines Verteilerbandes (V) etwa im Verhältnis von 3:1 stehen.

5. Verteilervorrichtung nach einem der Ansprüche 1 bis 4,
**dadurch gekennzeichnet, dass**
das Zuführband (Z) oberhalb mindestens eines Verteilerbandes (V) angeordnet ist und insbesondere zumindest bereichsweise nach unten geneigt ist.

6. Verteilervorrichtung nach einem der Ansprüche 1 bis 5,
**dadurch gekennzeichnet, dass**
das Zuführband (Z) zumindest zwei in Förderrichtung hintereinander angeordnete Förderbänder (10, 12) aufweist, wobei das in Förderrichtung vordere Förderband (12) nach unten geneigt ist.

7. Verteilervorrichtung nach einem der Ansprüche 1 bis 6,
**dadurch gekennzeichnet, dass**
das Zuführband (Z) mit mindestens einem Verteilerband (V) teilweise, insbesondere um etwa die halbe Breite des Verteilerbandes, überlappt.

8. Verteilervorrichtung nach einem der Ansprüche 1 bis 7,
**dadurch gekennzeichnet, dass**
das Zuführband (Z) und mindestens ein Verteilerband (V) übereinander derart vertikal beabstandet sind, dass auf dem Verteilerband (V) befindliche Produkte unter dem Zuführband (Z) hindurch gefördert werden können.

9. Verteilervorrichtung nach einem der Ansprüche 1 bis 8,
**dadurch gekennzeichnet, dass**
zwei Verteilerbänder (V) in Förderrichtung zwischen Zuführband (Z) und Abführband (A) hintereinander angeordnet sind, wobei die Verteilerbänder (V) unabhängig voneinander quer zur Förderrichtung verschiebbar und die Teile der Verteilerbänder (V) unabhängig voneinander in und entgegen der Förderrichtung angetrieben sind.

10. Verteilervorrichtung nach Anspruch 9,
**dadurch gekennzeichnet, dass**
die Verteilerbänder (V) in gleicher oder entgegen gesetzter Richtung quer zur Förderrichtung gleichzeitig verschiebbar sind.

11. Verfahren zum Verteilen von auf einem Förderband angeförderten Produkten mit einer Verteilervorrichtung nach zumindest einem der vorstehenden Ansprüche, wobei durch ausgewähltes Antreiben der Teile mindestens eines Verteilerbandes (V) in und entgegen der Förderrichtung sowie durch Verschieben mindestens eines Verteilerbandes (V) quer zur Förderrichtung eine Verteilung der angeförderten Produkte erfolgt.

12. Verfahren nach Anspruch 11,
**dadurch gekennzeichnet,**
**dass** abzuführende Gruppen von nebeneinander liegenden Produkten zumindest hinsichtlich der Breite jeweils vollständig auf dem Verteilerband (V) zusammengestellt werden.

13. Verfahren nach Anspruch 11 oder 12,
**dadurch gekennzeichnet, dass**
das Zuführband (Z) und mindestens ein Verteilerband (V) zeitweise synchron in Förderrichtung bewegt werden.

14. Verfahren nach Anspruch 11, 12 oder 13,
**dadurch gekennzeichnet, dass**
die zugeführten und die abgeführten Produkte in Gruppen nebeneinander angeordnet werden, wobei die Anzahl m der Mitglieder einer abgeführten Gruppe kein ganzzahliges Vielfaches der Anzahl n der Mitglieder der zugeführten Gruppe ist.

15. Verfahren nach einem der Ansprüche 11 bis 14,
**dadurch gekennzeichnet, dass**
zwei Verteilerbänder (V) in gleicher oder entgegen gesetzter Richtung quer zur Förderrichtung zeitweise gleichzeitig verschoben werden.

## Claims

1. A distributor apparatus for products, comprising
an infeed belt (Z) and an outfeed belt (A) which are arranged sequentially in the conveying direction; and
at least one distributor belt (V) which is arranged in the conveying direction between the infeed belt (Z) and the outfeed belt (A), wherein:
the distributor belt (V) can be driven in and counter to the conveying direction and is displaceable transversely to the conveying direction, the distributor belt (V) is divided into at least two in the conveying direction; and
each part (14A, 14B) of the distributor belt (V) has a drive, with the drives (24A, 24B) being independent of one another,
**characterized in that**
the parts (14A, 14B) of the distributor belt (V) are arranged directly next to one another and are displaceable as a unit transversely to the conveying direction.

2. A distributor apparatus in accordance with claim 1, **characterized in that** the distributor belt (V) is arranged between the infeed belt (Z) and the outfeed belt (A) such that a gap present in the conveying direction between the infeed belt (Z) and the outfeed belt (A) is bridged by the distributor belt (V).

3. A distributor apparatus in accordance with claim 1 or claim 2, **characterized in that** at least one distributor belt (V) has substantially the same width as the outfeed belt (A) and is in particular wider than the infeed belt (Z).

4. A distributor apparatus in accordance with any of claims 1 to 3, **characterized in that** the width dimensions of the two parts (14A, 14B) of at least one distributor belt (V) are approximately in the ratio 3:1.

5. A distributor apparatus in accordance with any of claims 1 to 4, **characterized in that** the infeed belt (Z) is arranged above at least one distributor belt (V) and is in particular downwardly inclined at least regionally.

6. A distributor apparatus in accordance with any of claims 1 to 5, **characterized in that** the infeed belt (Z) has at least two conveyor belts (10, 12) arranged in the conveying direction one after the other, with the front conveyor belt (12) in the conveying direction being downwardly inclined.

7. A distributor apparatus in accordance with any of claims 1 to 6, **characterized in that** the infeed belt (Z) partly overlaps at least one distributor belt (V), in particular by approximately half the width of the distributor belt.

8. A distributor apparatus in accordance with any of claims 1 to 7, **characterized in that** the infeed belt (Z) and at least one distributor belt (V) are spaced vertically apart above one another such that products located on the distributor belt (V) can be conveyed beneath the infeed belt (Z).

9. A distributor apparatus in accordance with any of claims 1 to 8, **characterized in that** two distributor belts (V) are arranged sequentially in the conveying direction between the infeed belt (Z) and the outfeed belt (A), with the distributor belts (V) being displaceable independently of one another transversely to the conveying direction and the parts of the distributor belts (V) being driven independently of one another in and counter to the conveying direction.

10. A distributor apparatus in accordance with claim 9, **characterized in that** the distributor belts (V) are displaceable simultaneously in the same direction or in the opposite direction transversely to the conveying direction.

11. A method for the distribution of products supplied on a conveyor belt using a distributor apparatus in accordance with at least one of the preceding claims, wherein a distribution of the supplied products takes place by a selected driving of the parts of at least one distributor belt (V) in and counter to the conveying direction and by displacement of at least one distributor belt (V) transversely to the conveying direction.

12. A method in accordance with claim 11, **characterized in that** groups of products disposed next to one another to be fed out are put together in each case completely on the distributor belt (V) at least with respect to the width.

13. A method in accordance with claim 12, **characterized in that** the infeed belt (Z) and at least one distributor belt (V) are at times moved synchronously in the conveying direction.

14. A method in accordance with any of claims 11, 12 or 13, **characterized in that** the infed products and the outfed products are arranged in groups next to one another, with the number m of the members of an outfed group not being an integral multiple of the number n of members of the infed group.

15. A method in accordance with any of claims 11 to 14, **characterized in that** two distributor belts (V) are displaced at times simultaneously in the same direction or in the opposite direction, transversely to the conveying direction.

## Revendications

1. Dispositif de répartition de produits, comprenant
une bande d'alimentation (Z) et une bande d'évacuation (A) agencées l'une derrière l'autre en direction de transport, et
au moins une bande de répartition (V) agencée entre la bande d'alimentation (Z) et la bande d'évacuation (A) en direction de transport,
dans lequel
la bande de répartition (V) est susceptible d'être entraînée dans et en sens opposé à la direction de transport et d'être déplacée transversalement à la direction de transport,
la bande de répartition (V) est subdivisée au moins en deux parties en direction de transport,
et
chaque partie (14A, 14B) de la bande de répartition (V) comprend un entraînement, les entraînements (24A, 24B) étant indépendants l'un de l'autre,
**caractérisé en ce que**
les parties (14A, 14B) de la bande de répartition (V) sont agencées immédiatement l'une à côté de l'autre et sont mobiles transversalement à la direction de transport en formant une unité.

2. Dispositif de répartition selon la revendication 1,
**caractérisé en ce que**
la bande de répartition (V) est agencée entre la bande d'alimentation (Z) et la bande d'évacuation (A) de telle sorte qu'une lacune existante en direction de transport entre la bande d'alimentation (Z) et la bande d'évacuation (A) est comblée par la bande de répartition (V).

3. Dispositif de répartition selon la revendication 1 ou 2,
**caractérisé en ce que**
au moins une bande de répartition (V) présente sensiblement la même largeur que la bande d'évacuation (A) et est en particulier plus large que la bande d'alimentation (Z).

4. Dispositif de répartition selon l'une des revendications 1 à 3,
**caractérisé en ce que** les dimensions en largeur des deux parties (14A, 14B) d'au moins une bande de répartition (V) sont approximativement dans un rapport de 3 : 1.

5. Dispositif de répartition selon l'une des revendications 1 à 4,
**caractérisé en ce que**
la bande d'alimentation (Z) est agencée au-dessus d'au moins une bande de répartition (V) et est en particulier inclinée vers le bas au moins localement.

6. Dispositif de répartition selon l'une des revendications 1 à 5,
**caractérisé en ce que**
la bande d'alimentation (Z) comprend au moins deux bandes de transport (10, 12) agencées les unes derrière les autres en direction de transport, la bande de transport (12) antérieure en direction de transport étant inclinée vers le bas.

7. Dispositif de répartition selon l'une des revendications 1 à 6,
**caractérisé en ce que**
la bande d'alimentation (Z) est en chevauchement partiel avec au moins une bande de répartition (V), en particulier approximativement de la moitié de la largeur de la bande de répartition.

8. Dispositif de répartition selon l'une des revendications 1 à 7,
**caractérisé en ce que**
la bande d'alimentation (Z) et au moins une bande de répartition (V) sont espacées verticalement l'une au-dessus de l'autre, de telle sorte que des produits situés sur la bande de répartition (V) peuvent être transportés en passant au-dessous de la bande d'alimentation (Z).

9. Dispositif de répartition selon l'une des revendications 1 à 8,
**caractérisé en ce que**
deux bandes de répartition (V) sont agencées l'une derrière l'autre en direction de transport entre la bande d'alimentation (Z) et la bande d'évacuation (A), les bandes de répartition (V) étant mobiles indépendamment l'une de l'autre transversalement à la direction de transport, et les parties des bandes de répartition (V) sont entraînées indépendamment les unes des autres dans et en sens opposé à la direction de transport.

10. Dispositif de répartition selon la revendication 9,
**caractérisé en ce que**
les bandes de répartition (V) sont mobiles simultanément dans la même direction ou en sens opposés transversalement à la direction de transport.

11. Procédé pour répartir des produits transportés sur une bande de transport, au moyen d'un dispositif de répartition selon l'une au moins des revendications précédentes, dans lequel une répartition des produits transportés s'effectue par un entraînement choisi des parties d'au moins une bande de répartition (V) dans et en sens opposé à la direction de transport ainsi que par une translation d'au moins une bande de répartition (V) transversalement à la direction de transport.

12. Procédé selon la revendication 11,
**caractérisé en ce que**
des groupes à évacuer de produits juxtaposés sont regroupés au moins quant à la largeur entièrement sur la bande de répartition (V).

13. Procédé selon la revendication 11 ou 12,
**caractérisé en ce que**
la bande d'alimentation (Z) et au moins une bande de répartition (V) sont déplacées temporairement de façon synchrone en direction de transport.

14. Procédé selon la revendication 11, 12 ou 13,
**caractérisé en ce que**
les produits alimentés et les produits évacués sont agencés en groupes les uns à côté des autres, le nombre m des membres d'un groupe évacué n'étant pas un multiple entier du nombre n des membres du groupe alimenté.

15. Procédé selon l'une des revendications 11 à 14,
**caractérisé en ce que**
deux bandes de répartition (V) sont déplacées temporairement simultanément dans la même direction ou en sens opposés transversalement à la direction de transport.
